# EUROPÄISCHE PATENTANMELDUNG

(11) **EP 2 910 749 A1**
(43) Veröffentlichungstag der Anmeldung: **26.08.2015**
(21) Anmeldenummer: 14199955.7
(22) Anmeldetag: 23.12.2014
(51) Int. Cl.: F01N 13/18, F16L 23/08

(54) **Profilschelle**

(30) Priorität: 24.02.2014 DE 102014102356
(71) Anmelder: NORMA Germany GmbH, 63477 Maintal (DE)
(72) Erfinder: Mann, Stephan, 63599 Biebergemünd (DE); Krüger, Manfred, 63654 Büdingen (DE)
(74) Vertreter: Patentanwälte Olbricht Buchhold Keulertz

(57) **Zusammenfassung**

Es wird eine Profilschelle (1) angegeben mit einem ringförmigen Schellenband (2), das an seinen axialen Enden radial nach innen geneigte Flanken und im Bereich seiner Umfangsenden jeweils einen Spannkopf (5, 6) aufweist, wobei die Spannköpfe (5, 6) durch einen Kopf (8) eines Gewindebolzens (7) und ein Gegengewindeelement (9) aufeinander zu spannbar sind.

Man möchte eine Profilschelle angeben, mit der eine zuverlässige Kegelflanschverbindung auch bei wechselnden Temperaturen möglich ist.

Hierzu ist vorgesehen, dass mindestens ein Distanzstück (10) zwischen dem Kopf (8) und dem Gegengewindeelement (9) angeordnet ist.

## Beschreibung

Die Erfindung betrifft eine Profilschelle mit einem ringförmigen Schellenband, das an seinen axialen Enden radial nach innen geneigte Flanken und im Bereich seiner Umfangsenden jeweils einen Spannkopf aufweist, wobei die Spannköpfe durch einen Kopf eines Gewindebolzens und ein Gegengewindeelement aufeinander zu spannbar sind.

Eine derartige Profilschelle wird beispielsweise verwendet, um eine Kegelflanschverbindung zu bilden. Bei einer Kegelflanschverbindung weisen die miteinander zu verbindenden Elemente an ihren zu verbindenden Stirnseiten jeweils einen Flansch auf, der auf seiner dem jeweils anderen Element abgewandten Seite geneigt ist. Die Profilschelle wird dann so um die beiden Flansche gelegt, dass die geneigten Flanken des Schellenbandes an den geneigten Rückseiten der Flansche anliegen. Wenn die Schelle dann gespannt wird, wird der Durchmesser des Schellenbandes vermindert und die geneigten Flanken üben eine axiale Spannkraft auf die Flansche aus.

Das Spannen des Schellenbandes erfolgt dadurch, dass man den Gewindebolzen und das Gegengewindeelement, beispielsweise ein Gewindemutter, gegeneinander verdreht und so den Abstand zwischen den beiden Spannköpfen vermindert. Durch diese Abstandsverminderung vermindert sich auch der Innendurchmesser des Schellenbandes.

Eine Kegelflanschverbindung wird vielfach in einer Abgasstranganlage eines Kraftfahrzeugs verwendet, um die einzelnen Elemente des Abgasstranges, beispielsweise Rohre und Schalldämpfer, miteinander zu verbinden. Eine Abgasstranganlage eines Kraftfahrzeuges nimmt im Betrieb des Kraftfahrzeuges eine erhöhte Temperatur an. Die erhöhte Temperatur führt zu einer Wärmedehnung von Elementen, beispielsweise auch der Kegelflansche. Diese Wärmedehnung führt auch zu einer Dehnung des Schellenbandes und des Gewindebolzens, die sich unter Umständen nach einer Abkühlung nicht mehr zurück bildet. Damit besteht die Gefahr, dass die Profilschelle lose wird. Dies führt zu einem unerwünschten Klappern und im Extremfall sogar zu einem Verlust der Profilschelle, so dass die Teile der Abgasstranganlage nicht mehr mit der notwendigen Sicherheit zusammengehalten werden.

Der Erfindung liegt die Aufgabe zugrunde, eine Profilschelle anzugeben, mit der eine zuverlässige Kegelflanschverbindung auch bei wechselnden Temperaturen möglich ist.

Diese Aufgabe wird bei einer Profilschelle der eingangs genannten Art dadurch gelöst, dass mindestens ein Distanzstück zwischen dem Kopf und dem Gegengewindeelement angeordnet ist.

Mit dem Distanzstück ist es möglich, den Kopf des Gewindebolzens und das Gegengewindeelement auf Anschlag zu spannen. Dadurch erhält man eine geometrisch bestimmte Ausgestaltung, die sich auch bei einer Temperaturänderung jedenfalls im Bereich des Gewindebolzens nicht so verändert, dass sich der Gewindebolzen lösen kann. Das Distanzstück schafft trotz der Möglichkeit, den Gewindebolzen auf Anschlag zu spannen, eine ausreichende Klemmlänge, so dass sich der Gewindebolzen entsprechend seiner Federkonstanten ausreichend dehnen kann, um die notwendige Spannkraft zu erzeugen, die auch gegen Lösen des Gewindebolzens sichert. Der Kopf muss nicht unbedingt einstückig mit dem Gewindebolzen ausgebildet sein. Er kann beispielsweise auch auf den Gewindebolzen aufgeschraubt sein.

Vorzugsweise umgibt das Distanzstück einen Gewindeabschnitt des Gewindebolzens. Damit ist es möglich, den Kopf des Gewindebolzens und das Gegengewindeelement sozusagen flächig abzustützen. Damit wird ein Kippen des Kopfes oder des Gegengewindeelements verhindert.

Vorzugsweise ist das Distanzstück zwischen den Spannköpfen angeordnet. Wenn der Gewindebolzen und das Gegengewindeelement gegeneinander verspannt werden, dann können sie die Spannköpfe zwischen sich und dem Distanzstück einspannen.

Vorzugsweise weist das Distanzstück auf seiner radial inneren Seite radial nach innen geneigte Flanken auf. Die radiale Innenseite des Distanzstücks kann also jedenfalls im Wesentlichen dem Querschnittsprofil des Schellenbandes angepasst sein, so dass die Kegelflansche auch im Bereich des Gewindebolzens mit einer axialen Spannkraft beaufschlagt werden können.

Vorteilhafterweise ist mindestens ein Spannkopf im ungespannten Zustand so gegenüber dem Distanzstück geneigt, dass er beim Spannen zuerst radial außen zur Anlage an das Distanzstück kommt. Mit dem Spannen des Gewindebolzens, also dem Verdrehen des Gewindebolzens gegenüber dem Gegengewindeelement wird dann das Schellenband weiter gespannt, so dass hier relativ große axiale Klemm- oder Spannkräfte auf die Kegelflansche ausgeübt werden können.

Vorzugsweise ist mindestens ein Spannkopf radial außen offen ausgebildet. Dies vereinfacht die Herstellung. Die Spannköpfe benötigen an ihrer radialen Außenseite keine aufeinander zuweisenden Anschlagzonen mehr.

In einer alternativen Ausgestaltung kann vorgesehen sein, dass das Distanzstück auf der Außenseite eines Spannkopfes angeordnet ist. Wenn mehrere Distanzstücke vorgesehen sind, dann können sie natürlich auf der Außenseite beider Spannköpfe angeordnet sein. In diesem Fall sorgen die Distanzstücke für eine ausreichende Klemmlänge und damit eine ausreichende Dehnbarkeit des Gewindebolzens.

Vorzugsweise ist das Distanzstück als Blechbiegeteil ausgebildet. Dies vereinfacht die Herstellung. Ein Blechbiegeteil kann außerdem ohne größeren Materialverlust und somit kostengünstig hergestellt werden. Durch das Biegen eines Blechs gibt es relativ viele Möglichkeiten der Formgebung.

Vorzugsweise weist das Distanzstück einen mehreckigen Querschnitt auf. Dies erleichtert die Montage. Man kann das Distanzstück dann beispielsweise an den Spannköpfen ausrichten.

Vorzugsweise ist das Distanzstück mit einem Spannkopf verbunden. Das Distanzstück ist dann verliersicher an der Profilschelle gehaltert, so dass man bei der Montage nicht mehr dafür Sorge tragen muss, dass das Distanzstück vorhanden ist.

Eine Möglichkeit hierfür besteht darin, dass das Distanzstück aus dem Spannkopf heraus geformt ist. Der Spannkopf ist in der Regel aus einem Blech gebildet. Man kann dieses Blech dann so umformen, dass das Distanzstück entsteht, das den Gewindebolzen umgibt.

Eine Alternative besteht darin, dass das Distanzstück in den Spannkopf eingehängt ist. Die Verliersicherung ergibt sich dann dadurch, dass der Gewindebolzen durch den Spannkopf und durch das Distanzstück hindurch geführt ist. Falls gewünscht oder erforderlich, kann der Gewindebolzen dann in der Distanzhülse mit einem Sicherungsring gegen Herausziehen gesichert werden.

Vorzugsweise weist das Distanzstück mindestens eine gestufte Stirnseite auf. Die Stirnseite ist die Seite des Distanzstücks, die im gespannten Zustand der Profilschelle an einem Spannkopf anliegt. Durch die Ausbildung der Stirnseite mit einer Stufe lässt sich erreichen, dass sich die Spannköpfe beim Spannen der Profilschelle relativ zueinander neigen. Dies kann man beispielsweise dazu verwenden, um die Spannköpfe an ihren radial inneren Enden weiter aufeinander zuzubewegen und damit eine bessere Spannung zu erreichen.

Hierbei ist bevorzugt, dass das Distanzstück eine radial äußere Wand aufweist, die in Umfangsrichtung länger als eine radial innere Wand ist. Man erreicht die Stufe also einfach dadurch, dass man die radial äußere Wand ein Stück weit in die Stirnseite vorstehen lässt. Damit kommt beim Spannen zunächst ein radial äußerer Bereich des Spannkopfs zur Anlage an das Distanzstück. Bei einem weiteren Spannen kann dann ein radial innerer Bereich des Spannkopfs weiter auf den anderen Spannkopf zu bewegt werden.

Vorzugsweise weist das Distanzstück eine Länge auf, die mindestens dem fünffachen des Nenndurchmessers eines Gewindeabschnitts des Gewindebolzens entspricht. Damit kann sichergestellt werden, dass der Gewindebolzen eine ausreichende Klemmlänge hat.

Die Erfindung wird im Folgenden anhand von bevorzugten Ausführungsbeispielen in Verbindung mit der Zeichnung beschrieben. Hierin zeigen:
- Fig. 1: eine schematische Schnittansicht durch eine Profilschelle,
- Fig. 2: einen Schnitt II-II nach Fig. 1,
- Fig. 3: eine Draufsicht auf Spannköpfe der Profilschelle,
- Fig. 4: einen Schnitt IV-IV nach Fig. 1,
- Fig. 5: eine abgewandelte Ausführungsform gegenüber Fig. 4,
- Fig. 6: eine abgewandelte Ausführungsform von Spannköpfen beim Spannen,
- Fig. 7: eine weiter abgewandelte Ausführungsform mit eingehängtem Distanzstück und
- Fig. 8: eine weitere Ausführungsform eines Distanzstücks.

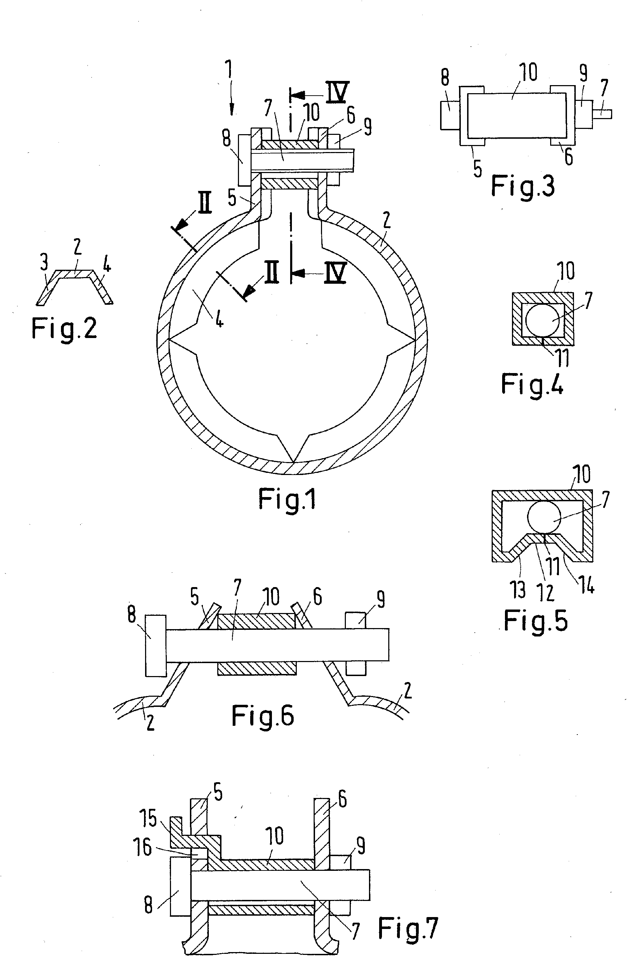

Fig. 1 zeigt in schematischer Ansicht eine Profilschelle 1 mit einem Schellenband 2, das zu einem Ring gebogen ist. Das Schellenband 2 weist, wie dies in Fig. 2 zu erkennen ist, radial nach innen geneigte Flanken 3, 4 auf, die vom Schellenband 2 radial nach innen abgebogen sein können. Die Flanken 3, 4 sind, wie dies in Fig. 1 zu erkennen ist, in Umfangsrichtung ein oder mehrmals unterbrochen, damit das Schellenband 2 aufgebogen werden kann.

Das Schellenband 2 weist an seinen beiden Umfangsenden jeweils einen Spannkopf 5, 6 auf. Die Spannköpfe 5, 6 sind vom Schellenband 2 radial nach außen abgebogen.

Ein Gewindebolzen 7 mit einem Kopf 8 ist durch die beiden Spannköpfe 5, 6 hindurch geführt und ist mit einem Gegengewindeelement verschraubt. Das Gegengewindeelement 9 kann beispielsweise durch eine Gewindemutter gebildet sein. Auch der Kopf 8 kann durch eine Gewindemutter gebildet sein.

Zwischen den beiden Spannköpfen 5, 6 ist ein Distanzstück 10 angeordnet, das im vorliegenden Fall als Hülse ausgebildet ist, die einen Gewindeabschnitt des Gewindebolzens 7 umgibt.

Zur Montage der Profilschelle 1 wird die Verschraubung zwischen den Gewindebolzen 7 und dem Gegengewindeelement 9 gelöst, so dass die beiden Spannköpfe 5, 6 unabhängig voneinander bewegt werden können. Das Schellenband 2 kann dann aufgebogen werden, um über Flansche einen noch zu bildenden Kegelflanschverbindung hinweg geführt zu werden. Danach werden die beiden Spannköpfe 5, 6 wieder aufeinander zu bewegt und der Gewindebolzen 7 wird mit dem Gegengewindeelement 9 in Eingriff gebracht. Wenn nun der Gewindebolzen 7 und das Gegengewindeelement 9 gegeneinander verdreht werden, werden die beiden Spannköpfe 5, 6 aufeinander zu bewegt. Dabei verringert sich der Innendurchmesser des Schellenbandes 2 und auch die Flanken 3, 4 werden radial nach innen bewegt. Dabei können sie aufgrund ihrer Neigung eine axiale Kraft auf nicht näher dargestellte Kegelflansche ausüben, wie das an sich bekannt ist.

Die beiden Spannköpfe 5, 6 können allerdings nur soweit aufeinander zu bewegt werden, wie es das Distanzstück 10 zulässt. Sobald die beiden Spannköpfe 5, 6 am Distanzstück 10 anliegen, ist eine weitere Verringerung des Innendurchmessers der Profilschelle nicht mehr möglich. Bei einer korrekten Dimensionierung ist dies aber auch nicht erforderlich.

Das Distanzstück 10 hat allerdings den Vorteil, dass der Gewindebolzen 7 und das Gegengewindeelement 9 auf Anschlag zueinander verschraubt werden können. Darüber hinaus schafft das Distanzstück 10 einen ausreichenden Abstand zwischen dem Kopf 8 und dem Gegengewindeelement 9. In diesem Abstand kann sich der Gewindebolzen 7 entsprechend seiner Federkonstanten dehnen, um die notwendige Spannkraft zu erzeugen. Bei einer ausreichenden Spannkraft ist die Schraubverbindung zwischen dem Gewindebolzen 7 und dem Gegengewindeelement 9 gegen ein Lösen gesichert.

Wie man in Fig. 3 erkennen kann, sind die Spannköpfe 5, 6 von radial außen gesehen im Querschnitt zwar U-förmig ausgebildet. Sie sind aber radial nach außen offen, weisen also an ihren radial äußeren Enden keine aufeinander zu weisenden Elemente mehr auf. Dies schafft günstige Voraussetzungen für eine kostengünstige Herstellung. Die U-Form der Spannköpfe 5, 6 bietet allerdings die Möglichkeit, das Distanzstück in einer vorbestimmten Position zu halten und gegen ein Verdrehen gegenüber den Spannköpfen 5, 6 zu sichern. Dies wird aus der schematischen Querschnittsansicht der Fig. 4 ersichtlich. Hier ist erkennbar, dass das Distanzstück 10 als Blechbiegeteil ausgebildet ist, bei dem ein Blechteil in eine im Querschnitt vieleckige Form gebracht worden ist. Das Blechteil ist in Umfangsrichtung um den Gewindebolzen 7 herum geschlossen. Es verbleibt lediglich eine Stoßnaht 11.

Durch die rechteckige Form ist es möglich, das Distanzstück 10 in die U-Form der Spannköpfe 5, 6 einzupassen.

Natürlich sind Abweichungen von der dargestellten Rechteck- oder Quadratform möglich. Das Distanzstück 10 kann auch eine andere vieleckige Form aufweisen.

Fig. 5 zeigt eine abgewandelte Form des Distanzstücks 10. Hier hat die radiale Innenseite des Distanzstücks 10 geneigte Flanken 13, 14. Die Form und Position der Flanken 13, 14 kann an die Form und Position der Flanken 3, 4 des Schellenbandes 2 angepasst sein, so dass die Kegelflansche auch im Bereich des Gewindebolzens mit einer axialen Spannkraft beaufschlagt werden können, die durch die Flanken 13, 14 des Distanzstücks 10 aufgebracht werden kann.

Fig. 1 zeigt die Profilschelle 1 in einem fertig montierten Zustand, in dem die Spannköpfe 5, 6 von beiden Seiten her am Distanzstück 10 anliegen.

Fig. 6 zeigt eine abgewandelte Ausgestaltung der Spannköpfe 5, 6 während des Spannens. Die Spannköpfe 5, 6 sind gegenüber dem Schellenband 2 so abgewinkelt, dass sie mit ihren radialen Außenseiten in Richtung auf das Distanzstück 10 zu geneigt sind. Wenn man dann den Gewindebolzen 7 und das Gegengewindeelement 9 gegeneinander verdreht, dann gelangen zunächst die radialen Außenseiten oder Enden der Spannköpfe 5, 6 zur Anlage an das Distanzstück 10. Bei einem weiteren Spannen, also bei einem weiteren Verdrehen des Gewindebolzens 7 und des Gegengewindeelements 9 gegeneinander, nähern sich die radial inneren Enden der Spannköpfe 5, 6 aneinander an. Auf diese Weise ist es möglich, eine relativ große Spannkraft in das Schellenband 2 einzuleiten.

In einer abgewandelten, nicht dargestellten Ausgestaltung kann vorgesehen sein, dass das Distanzstück 10 auf der Außenseite eines Spannkopfes 5, 6 angeordnet ist. Man kann auch mehrere Distanzstücke verwenden, die dann auf den Außenseiten beider Spannköpfe 5, 6 angeordnet sein können. In diesem Fall stellt das Distanzstück oder stellen die Distanzstücke eine ausreichend große Spannlänge zur Verfügung, damit sich der Gewindebolzen 7 entsprechend seiner Federkonstanten ausdehnen kann.

Eine Abwandlung der Ausgestaltung nach Fig. 6 kann dadurch realisiert werden, dass die Spannköpfe 5, 6 beim Anlegen an das Distanzstück 10 parallel zueinander ausgerichtet sind, die Stirnseiten des Distanzstücks 10 (oder jedenfalls eine Stirnseite) jedoch radial nach innen abgeschrägt sind, so dass sich der gleiche Effekt beim Spannen ergibt, wie im Zusammenhang mit Fig. 6 beschrieben. In diesem Fall kann es von Vorteil sein, wenn zwischen dem Kopf 8 und dem Spannkopf 5 und/oder zwischen dem Gegengewindeelement 9 und dem Spannkopf 6 eine keilförmige Scheibe angeordnet ist, so dass im gespannten Zustand der Kopf 8 und/oder das Gegengewindeelement 9 auf Flächen wirken, die senkrecht zur Spannrichtung gerichtet sind.

Bevorzugterweise ist das Distanzstück 10 verliersicher mit einem Spannkopf 5 verbunden. Eine Möglichkeit hierzu besteht darin, dass Distanzstück 10 und den Spannkopf einteilig auszubilden. Dies kann man beispielsweise dadurch erreichen, dass das Distanzstück 10 aus einer Verlängerung des Spannkopfes 5 heraus gebogen wird.

Eine alternative Ausgestaltung ist in Fig. 7 dargestellt. Hier weist das Distanzstück 10 einen Haken 15 auf, der durch eine Öffnung 16 im Spannkopf 5 geführt ist. Die Öffnung 16 kann beispielsweise radial außerhalb des Gewindebolzens 7 angeordnet sein. Wenn der Gewindebolzen 7 dann durch den Spannkopf 5 und durch das Distanzstück 10 hindurchgeführt wird, dann ist das Distanzstück 10 ebenfalls verliersicher am Spannkopf 5 gehalten. Gegebenenfalls kann man noch einen Sicherungsring, beispielsweise einen Kunststoffring, auf den Gewindebolzen 7 aufsetzen, um den Gewindebolzen 7 verliersicher innerhalb des Distanzstücks 10 zu halten.

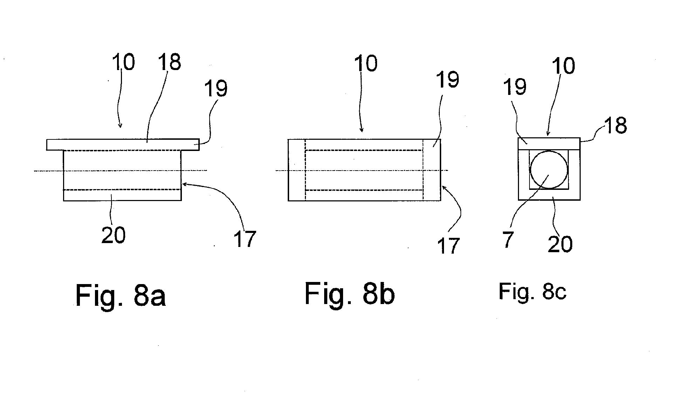

Fig. 8 zeigt eine abgewandelte Ausgestaltung eines Distanzstücks 10 und zwar Fig. 8a in Seitenansicht, Fig. 8b in Draufsicht von radial außen und Fig. 8c von einer Stirnseite her.

In der Seitenansicht nach der Fig. 8a ist zu erkennen, dass das Distanzstück 10 eine Stirnseite 17 aufweist, in die eine radial äußere Wand 18 mit einem Überstand 19 hineinragt. Damit ist die radial äußere Wand 18 in Umfangsrichtung, also in einer Richtung zwischen den beiden Spannköpfen 5, 6, länger als eine radial innere Wand 20. Auf diese Weise ist es mit einfachen Mitteln möglich, dass die Stirnseite 17 eine gestufte Ausbildung erhält.

In allen Fällen ist es von Vorteil, wenn das Distanzstück 10 eine Länge aufweist, die mindestens dem fünffachen des Nenndurchmessers eines Gewindeabschnitts des Gewindebolzens 7 entspricht. Damit lässt sich sicherstellen, dass der Gewindebolzen 7 eine ausreichende Klemmlänge aufweist.

## Patentansprüche

1. Profilschelle (1) mit einem ringförmigen Schellenband (2), das an seinen axialen Enden radial nach innen geneigte Flanken (3, 4) und im Bereich seiner Umfangsenden jeweils einen Spannkopf (5, 6) aufweist, wobei die Spannköpfe (5, 6) durch einen Kopf (8) eines Gewindebolzens (7) und ein Gegengewindeelement (9) aufeinander zu spannbar sind, **dadurch gekennzeichnet, dass** mindestens ein Distanzstück (10) zwischen dem Kopf (8) und dem Gegengewindeelement (9) angeordnet ist.

2. Profilschelle nach Anspruch 1, **dadurch gekennzeichnet, dass** das Distanzstück (10) einen Gewindeabschnitt des Gewindebolzens (7) umgibt.

3. Profilschelle nach Anspruch 1 oder 2, **dadurch gekennzeichnet, dass** das Distanzstück (10) zwischen den Spannköpfen (5, 6) angeordnet ist.

4. Profilschelle nach Anspruch 3, **dadurch gekennzeichnet, dass** das Distanzstück (10) auf seiner radial inneren Seite radial nach innen geneigte Flanken (13, 14) aufweist.

5. Profilschelle nach Anspruch 3 oder 4, **dadurch gekennzeichnet, dass** mindestens ein Spannkopf (5, 6) im ungespannten Zustand so gegenüber dem Distanzstück (10) geneigt ist, dass er beim Spannen zuerst radial außen zur Anlage an das Distanzstück (10) kommt.

6. Profilschelle nach einem der Ansprüche 3 bis 5, **dadurch gekennzeichnet, dass** mindestens ein Spannkopf (5, 6) radial außen offen ausgebildet ist.

7. Profilschelle nach Anspruch 1 oder 2, **dadurch gekennzeichnet, dass** das Distanzstück (10) auf der Außenseite eines Spannkopfes (5, 6) angeordnet ist.

8. Profilschelle nach einem der Ansprüche 1 bis 7, **dadurch gekennzeichnet, dass** das Distanzstück (10) als Blechbiegeteil ausgebildet ist.

9. Profilschelle nach Anspruch 8, **dadurch gekennzeichnet, dass** das Distanzstück (10) einen mehreckigen Querschnitt aufweist.

10. Profilschelle nach einem der Ansprüche 1 bis 9, **dadurch gekennzeichnet, dass** das Distanzstück (10) mit einem Spannkopf (5, 6) verbunden ist.

11. Profilschelle nach Anspruch 10, **dadurch gekennzeichnet, dass** das Distanzstück (10) aus dem Spannkopf (5) herausgeformt ist.

12. Profilschelle nach Anspruch 10, **dadurch gekennzeichnet, dass** das Distanzstück (10) in den Spannkopf (5) eingehängt ist.

13. Profischelle nach einem der Ansprüche 1 bis 12, **dadurch gekennzeichnet, dass** das Distanzstück (10) mindestens eine gestufte Stirnseite (17) aufweist.

14. Profilschelle nach Anspruch 13, **dadurch gekennzeichnet, dass** das Distanzstück (10) eine radial äußere Wand (18) aufweist, die in Umfangsrichtung länger als eine radial innere Wand (20) ist.

15. Profilschelle nach einem der Ansprüche 1 bis 14, **dadurch gekennzeichnet, dass** das Distanzstück (10) eine Länge aufweist, die mindestens dem fünffachen des Nenndurchmessers eines Gewindeabschnitts des Gewindebolzens (7) entspricht.
